(19) Europäisches Patentamt
European Patent Office
Office européen des brevets

(11) **EP 1 902 561 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(21) Anmeldenummer: **06763984.9**

(22) Anmeldetag: **30.06.2006**

(51) Int Cl.:
*H04L 29/06* (2006.01)    *H04N 21/2381* (2011.01)

(86) Internationale Anmeldenummer:
**PCT/EP2006/063728**

(87) Internationale Veröffentlichungsnummer:
**WO 2007/006664 (18.01.2007 Gazette 2007/03)**

(54) **VERFAHREN ZUM SENDEN EINES MEDIADATENSTROMS UND VERFAHREN ZUM EMPFANGEN UND ERSTELLEN EINES REKONSTRUIERTEN MEDIADATENSTROMS, SOWIE DAZUGEHÖRIGE SENDEVORRICHTUNG UND EMPFANGSVORRICHTUNG**

METHOD FOR SENDING A MEDIA DATA STREAM AND METHOD FOR RECEIVING AND CREATING A RECONSTRUCTED MEDIA DATA STREAM, AND ASSOCIATED TRANSMISSION APPARATUS AND RECEPTION APPARATUS

PROCEDE D'EMISSION DE FLUX DE DONNEES MULTIMEDIA, PROCEDE DE RECEPTION ET DE GENERATION DE FLUX DE DONNEES MULTIMEDIA RECONSTRUIT, ET DISPOSITIF D'EMISSION ET DISPOSITIF DE RECEPTION CORRESPONDANTS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.07.2005 DE 102005032080**

(43) Veröffentlichungstag der Anmeldung:
**26.03.2008 Patentblatt 2008/13**

(73) Patentinhaber: **Siemens Aktiengesellschaft**
**80333 München (DE)**

(72) Erfinder:
• **AMON, Peter**
**81675 München (DE)**

• **RAUSCHENBACH, Uwe**
**85586 Poing (DE)**

(56) Entgegenhaltungen:
**US-A- 5 515 377    US-A1- 2004 198 371**

• **MRAK M ET AL: "An overview of basic techniques behind scalable video coding" ELECTRONICS IN MARINE, 2004. PROCEEDINGS ELMAR 2004. 46TH INTERNATIONAL SYMPOSIUM ZADAR, CROATIA 16-18 JUNE 2004, PISCATAWAY, NJ, USA,IEEE, 16. Juni 2004 (2004-06-16), Seiten 597-602, XP010739927 ISBN: 953-7044-02-5**

**Beschreibung**

Die Erfindung betrifft ein Verfahren gemäß dem Oberbegriff des Anspruchs 1 und ein Verfahren gemäß dem Oberbegriff des Anspruchs 4. Ferner betrifft die Erfindung eine Sendevorrichtung gemäß dem Oberbegriff des Anspruchs 11 und eine Empfangsvorrichtung gemäß dem Oberbegriff des Anspruchs 12.

In vielen Anwendungen werden Mediadatenströme, z.B. Videodatenströme oder Audiodatenströme, in unterschiedlichen Qualitäten benötigt. Beispielsweise ist ein Mobiltelefon nur in der Lage den Videodatenstrom mit einer kleinen Bildauflösung, z.B. 176x144 Bildpunkte, wiederzugeben. Hingegen können tragbare Computer, wie z.B. ein Tablet-PC, auf ihrem Display den Videodatenstrom mit bis zu 1280 x 768 Bildpunkten anzeigen.

Die US 2004/0198371 A1 und die US 5,515,377 A offenbaren jeweils ein Verfahren zum Empfangen und Erstellen eines rekonstruierten Mediadatenstroms, bei dem Daten von dem ersten und zumindest einem zweiten Datenstrom empfangen werden, wobei der erste Datenstrom den Mediadatenstrom in einer Basisqualität und ein oder mehrere Datenströme zusammen mit dem ersten Datenstrom den Mediadatenstrom in einer gegenüber der Basisqualität verbesserten Qualität repräsentieren. Der rekonstruierte Mediadatenstrom wird durch Decodierung der Daten des ersten und zumindest eines zweiten Datenstroms generiert.

Der Erfindung liegt die Aufgabe zugrunde, ein Verfahren und eine Vorrichtung anzugeben, welche das Senden bzw. Empfangen eines Mediadatenstroms für empfangende Endgeräte mit unterschiedlichen Geräteeigenschaften in einer einfachen und wirtschaftlichen Weise ermöglicht.

Diese Aufgabe wird ausgehend von dem Verfahren gemäß dem Oberbegriff des Anspruchs 1 bzw. Anspruchs 4 jeweils durch dessen kennzeichnende Merkmale gelöst. Ferner wird diese Aufgabe gemäß dem Oberbegriff des Anspruchs 11 bzw. 12 jeweils durch dessen kennzeichnende Merkmale gelöst.

Sonstige Weiterbildungen der Erfindung sind in den Unteransprüchen wiedergegeben.

Bei dem Verfahren zum Senden eines Mediadatenstroms werden durch eine Codierung des Mediadatenstroms ein erster Datenstrom und zumindest ein zweiter Datenstrom derart generiert, dass der erste Datenstrom den Mediadatenstrom in einer Basisqualität und ein oder mehrere zweite Datenströme zusammen mit dem ersten Datenstrom den Mediadatenstrom in einer gegenüber der Basisqualität verbesserten Qualität repräsentieren. Daten des ersten und der zweiten Datenströme werden jeweils in einem vordefiniert zugeordneten Übertragungskanal gesendet.

Durch das erfindungsgemäße Verfahren wird es ermöglicht, dass Verteildienste, z.B. Streaming-Dienste oder Broadcasting-Dienste, Endgeräten mit unterschiedlichen Gerätefunktionalitäten Mediadatenströme derart anbieten können, dass diese empfangen, verarbeitet und wiedergegeben werden können. Ferner erlaubt das erfindungsgemäße Verfahren eine ressourceneffiziente Anwendung in einem Endgerät, da lediglich diejenigen Übertragungskanäle empfangen werden müssen, die von dem Endgerät verarbeitet werden können bzw. sollen. Hierdurch kann sowohl ein Stromverbrauch reduziert bzw. eine Betriebsdauer des Endgeräts erhöht, als auch eine Komplexität bei der Verarbeitung der empfangenen Daten der Übertragungskanäle gesenkt werden.

Werden vorzugsweise die Daten des ersten und/oder der zweiten Datenströme unter Verwendung eines Kompressionsverfahrens erzeugt, wobei durch das Kompressionsverfahren insbesondere digitale Daten generiert werden, so kann eine zu übertragene Datenmenge reduziert werden. Ferner können als Kompressionsverfahren standardisierte Codierverfahren eingesetzt werden, wodurch sich eine kostengünstige Implementierung realisieren lässt.

In einer Variante des erfindungsgemäßen Verfahrens werden vorzugsweise der erste und die zweiten Datenströme derart generiert, dass sie eine jeweilige Datenrate in Abhängigkeit einer Bandbreite des jeweiligen Übertragungskanals aufweisen. Hierdurch kann bei der Codierung der Datenströme deren Datenrate an die Bandbreite des jeweiligen Übertragungskanals angepasst werden, wodurch sich eine effiziente Auslastung der Übertragungskanäle erzielen lässt.

Bei einem Verfahren zum Empfangen und Erstellen eines rekonstruierten Mediadatenstroms werden Daten von dem ersten Datenstrom oder von dem ersten und zumindest einem zweiten Datenstrom in jeweils einem vordefiniert zugeordneten Übertragungskanal empfangen, wobei der erste Datenstrom den Mediadatenstrom in einer Basisqualität und ein oder mehrere zweite Datenströme zusammen mit dem ersten Datenstrom den Mediadatenstrom in einer gegenüber der Basisqualität verbesserten Qualität repräsentieren, und der rekonstruierte Mediadatenstrom durch Decodierung der Daten des ersten Datenstroms oder durch Decodierung der Daten des ersten und zumindest eines zweiten Datenstroms generiert.

Mit Hilfe des Verfahrens zum Empfangen wird es einem Endgerät ermöglicht den rekonstruierten Mediadatenstrom unter Verwendung des ersten und optional eines oder mehrerer zweiter Datenströme zu erzeugen. Hierbei erlaubt das erfindungsgemäße Verfahren eine ressourceneffiziente Anwendung in einem Endgerät, da lediglich diejenigen Übertragungskanäle empfangen werden müssen, die von dem Endgerät verarbeitet werden können bzw. sollen. Hierdurch kann sowohl ein Stromverbrauch reduziert bzw. eine Betriebsdauer des Endgeräts erhöht, als auch eine Komplexität bei der Verarbeitung der empfangenen Daten der Übertragungskanäle gesenkt werden.

Wird vorzugsweise eine Anzahl von zusätzlich zum Übertragungskanal des ersten Datenstroms zu empfangende Übertragungskanäle der zweiten Datenströme in Abhängigkeit von einem Steuersignal bestimmt, so kann ein Endgerät sowohl in Abhängigkeit seiner Gerätefunktionalität, z.B. Wiedergabeeigenschaft des Gerätebildschirms, als auch von über die Zeit veränderlichen Parametern, wie z.B. eine schwankende Rechenleistung des Endgeräts, mehr oder weniger Übertragungskanäle der zweiten Datenströme bei der Erzeugung des rekonstruierten Mediadatenstroms berücksichtigen.

Wird zusätzlich das Steuersignal in Abhängigkeit einer Kapazität einer Batterie einer das Verfahren zum Empfang ausführenden Empfangsvorrichtung, eines unterstützten Gerätefunktionsumfangs der Empfangsvorrichtung, einer Auslastung der Empfangsvorrichtung und/oder auf Grundlage einer Veränderung einer Übertragungsqualität generiert, so können sowohl statische als auch dynamische individuelle Eigenschaften des Endgeräts berücksichtigt werden.

Vorzugsweise werden den Übertragungskanälen jeweils Zeitschlitze eines Übertragungsverfahrens zugewiesen. Hiermit können in einfacher Weise die Übertragungskanäle übermittelt werden, da eine Empfangsvorrichtung ohne großen Rechenaufwand die übertragenen Daten der Übertragungskanäle wiedergewinnen kann. Ferner braucht eine Empfangseinheit nur während der zu berücksichtigenden Übertragungskanäle bzw. Zeitschlitzen eingeschaltet werden, wodurch sich gegenüber einem Dauerempfang ein reduzierter Stromverbrauch einstellt.

In einer weiteren Variante werden den Übertragungskanälen Unterträger eines Modulationsverfahren derart zugeordnet, dass die einzelnen Übertragungskanäle als Teil eines zum Modulationsverfahren dazugehörigen Demodulationsverfahrens trennbar sind. Hierdurch kann eine Reduktion des Rechenaufwands erreicht werden, da nur die Unterträger verarbeitet werden müssen, die Daten umfassen, welche für die Erstellung des rekonstruierten Mediadatenstroms benutzt werden.

Vorzugsweise wird den Übertragungskanälen jeweils ein spezifisches Frequenzband eines Übertragungsverfahrens zugewiesen. Hiermit kann in vorteilhafter Weise eine einfache und kostengünstige Trennung der Übertragungskanäle in der Empfangsvorrichtung erzielt werden, da lediglich die Frequenzen verarbeitet werden müssen, die Daten umfassen, welche für die Erstellung des rekonstruierten Mediadatenstroms benutzt werden.

Werden in einer vorzugsweisen Erweiterung zumindest zwei Datenströme, umfassend den ersten und mindestens einen zweiten Datenstrom oder mindestens zwei zweite Datenströme (, einem einzigen Übertragungskanal zugeordnet, so kann eine Übertragung des ersten und/oder zweiten Datenstroms in effizienter Weise erfolgen. Denn ein möglicher Signalisierungsaufwand für bspw. die den Übertragungskanälen zugeordneten Zeitschlitze wird reduziert. Ferner kann eine Komplexität in einem Endgerät reduziert werden, da weniger zu berücksichtigende Übertragungskanäle vorhanden sind.

Die Erfindung betrifft ferner eine Sendevorrichtung zum Senden eines Mediadatenstroms mit einem Codiermodul, das derart ausgestaltet ist, dass durch eine Codierung des Mediadatenstroms ein erster Datenstrom und zumindest ein zweiter Datenstrom derart generiert wird, dass der erste Datenstrom den Mediadatenstrom in einer Basisqualität und ein oder mehrere zweite Datenströme zusammen mit dem ersten Datenstrom den Mediadatenstrom in einer gegenüber der Basisqualität verbesserten Qualität repräsentieren, und mit einem ersten Zuordnungsmodul, das derart ausgestaltet ist, dass Daten des ersten und der zweiten Datenströme jeweils in einem vordefiniert zugeordneten Übertragungskanal gesendet werden. Mit dieser Sendevorrichtung kann das Verfahren zum Senden implementiert und ausgeführt werden.

Zusätzlich umfasst die Erfindung eine Empfangsvorrichtung zum Empfangen und Erstellen eines rekonstruierten Mediadatenstroms, mit einem zweiten Zuordnungsmodul, das derart ausgestaltet ist, dass Daten von dem ersten Datenstrom oder von dem ersten und zumindest einem zweiten Datenstrom in jeweils einem vordefiniert zugeordneten Übertragungskanal empfangen werden, wobei der erste Datenstrom den Mediadatenstrom in einer Basisqualität und ein oder mehrere zweite Datenströme zusammen mit dem ersten Datenstrom den Mediadatenstrom in einer gegenüber der Basisqualität verbesserten Qualität repräsentieren, und mit einem Decodiermodul, das derart ausgestaltet ist, dass der rekonstruierte Mediadatenstrom durch Decodierung der Daten des ersten Datenstroms oder durch Decodierung der Daten des ersten und zumindest eines zweiten Datenstroms generiert wird. Mit dieser Empfangsvorrichtung kann das erfindungsgemäße Verfahren zum Empfang implementiert und ausgeführt werden.

Die Erfindung und ihre Weiterbildungen werden nachfolgend anhand der Figuren 1 bis 4 näher erläutert.

Es zeigen:

Figur 1 ein Ausführungsbeispiel einer Sendevorrichtung und einer Empfangsvorrichtung zur Durchführung des erfindungsgemäßen Verfahrens;

Figur 2 eine Zuordnung von Daten verschiedener Datenströme zu einem jeweiligen Frequenzband in Abhängigkeit der Zeit;

Figur 3 einen Signalraum und eine Codezuordnung bei Verwendung eines 16-QAM Verfahrens zur Zuordnung von Daten verschiedener Datenströme;

Figur 4A ein Ausführungsbeispiel einer Zuordnung von Daten verschiedener Datenströme bei Verwendung eines 16-QAM Verfahrens;

Figur 4B    ein Ausführungsbeispiel zur Wiedergewinnung von Daten verschiedener Datenströme bei Verwendung eines 16-QAM Verfahrens.

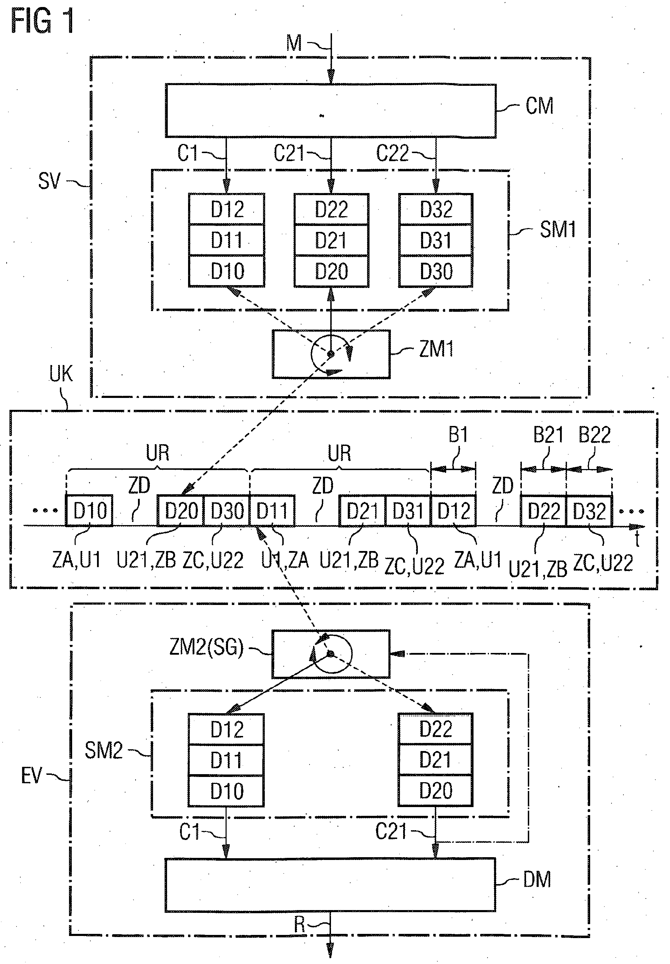

Elemente mit gleicher Funktion und Wirkungsweise sind in den Figuren 1 bis 4 mit denselben Bezugszeichen versehen.

Das erfindungsgemäße Verfahren, zum Senden eines Mediadatenstroms M bzw. zum Empfangen und Erstellen eines rekonstruierten Mediadatenstroms R wird anhand eines Video-Verteildienstes näher erläutert. Dabei soll eine Nachrichtensendung, bspw. umfassend ein Videosignal, an zwei Endgeräte übermittelt werden, wobei diese Endgeräte unterschiedliche Gerätefunktionalitäten aufweisen. Das erste Endgerät kann nur ein Videosignal mit niedriger Bildauflösung, z.B. in QCIF = 176 x 144 Bildpunkte (QCIF = Quarter Common Intermediate Format), bei niedriger Bildwiederholrate, z.B. 15 fps (fps = frames per second) verarbeiten. Hingegen ist das zweite Endgerät in der Lage ein Videosignal mit hoher Bildauflösung, z.B. in CIF = 352 x 288 Bildpunkte (CIF = Common Intermediate Format), bei niedriger Bildwiederholrate, z.B. 15 fps, zu empfangen, zu prozessieren und darzustellen.

Die Nachrichtensendung in Form eines Videosignals stellt somit einen möglichen Typ eines Mediadatenstroms M dar. Andere Typen eines Mediadatenstroms M sind beispielsweise ein Standbild, ein Sprachsignal, ein Musikstück oder ein Datensatz, der in mehreren Qualitätsstufen darstellbar ist. Für dieses Ausführungsbeispiel wird beispielhaft angenommen, dass der Mediadatenstrom M aus einer Folge von uncodierten Bildern mit einer Bildfolge von 30 fps und einer CIF Bildauflösung besteht, wobei jeder Bildpunkt aus einem Tripel mit den Farben Rot, Grün und Blau dargestellt wird. Alternativ kann jeder Bildpunkt aus einer Kombination eines Helligkeitswertes (= Luminanz) und zwei Farbwerten (=Crominanz) gebildet werden.

Der Mediadatenstrom M wird im Folgenden bildweise einem Codiermodul CM einer Sendevorrichtung SV zugeführt. Dies ist in Figur 1 zu sehen. Das Codiermodul CM ist derart ausgestaltet, dass dieses einen oder mehrere Datenströme C1, C21, C22 erzeugt bzw. codiert, welche eine Skalierung des Mediadatenstroms M ermöglichen. Eine Skalierung bedeutet dabei, dass je mehr Datenströme bei einer Rekonstruktion des Mediadatenstroms M, d.h. bei einer Decodierung der Datenströme, berücksichtigt werden, desto besser ist eine Qualität eines rekonstruierten Mediadatenstroms R. Im Allgemeinen können folgende zwei Arten von Skalierungstypen unterschieden werden:

- Schichtenmodell:

    Hierbei sind die Datenströme hierarchisch derart organisiert, dass die Datenströme aufeinander aufbauen. Ausgehend von dem ersten Datenstrom C1, der auch als Basisschicht bezeichnet wird, wird durch sukzessive Hinzunahme einer Erweiterungsschicht, z.B. dem zweiten Datenstrom C21, eine Qualitätsverbesserung in z.B. Richtung Bildauflösung und Bildwiederholrate erzielt. Aufbauend hierauf kann durch Hinzunahme einer zusätzlichen Erweiterungsschicht, z.B. des zweiten Datenstroms C22, eine zusätzliche Verbesserung in z.B. Richtung Bildwiederholrate erreicht werden. Somit ist bei dem Schichtenmodell eine feste Reihenfolge bei der Hinzunahme der einzelnen Schichten vorgegeben.

- Klassenmodell:

    Hierbei sind die Datenströme in Klassen organisiert. Der erste Datenstrom C1 entspricht einer Basisklasse und jeder der zweiten Datenströme C21, C22 repräsentiert eine der Erweiterungsklassen. Durch Hinzunahme einer Erweiterungsklasse zu einer Menge von Klassen inklusive der Basisklasse wird eine Qualitätsverbesserung in einer Dimension, z.B. in Richtung Bildwiederholrate oder Bildauflösung erzielt. Die Verwendung von Klassen ermöglicht eine flexiblere Auswahl der Qualitätsstufen als der Einsatz von Schichten, da aufbauend auf der Basisklasse eine oder mehrere Erweit erungsklassen mit mehr Freiheitsgraden kombiniert werden können.

Im vorliegenden Ausführungsbeispiel werden drei Datenströme C1, C21, C22 unter Verwendung des Schichtenmodells generiert. Der erste Datenstrom C1 repräsentiert dabei die Basisschicht mit einer Bildauflösung in QCIF und der Bildwiederholrate von 15 fps. Der zweite Datenstrom C21 stellt eine erste Erweiterungsschicht dar, die eine Rekonstruktion des Mediadatenstroms M mit einer Bildauflösung in CIF und mit der,Bildwiederholrate von 15 fps erlaubt. Eine zweite Erweiterungsschicht wird durch den zweiten Datenstrom C22 dargestellt, der eine Rekonstruktion mit einer Bildauflösung in 4CIF (4CIF = four times Common Interchange Format, 704 x 576 Bildpunkte) mit einer Bildwiederholrate von 30 fps ermöglicht. Der erste und die zweiten Datenströme C1, C21, C22 können nach einem Videokompressionsstandard, z.B. nach H.264, MPEG4-FGS (MPEG - Motion Picture Expert Group; FGS - Fine Granular Scalable Coding) oder nach dem derzeit in Standardisierung befindlichen SVC-Standard (SVC - Scalable Video Coding), codiert bzw. komprimiert werden. Ferner kann eine Codierung in digitaler Form erfolgen, wobei codierte Daten des ersten bzw. der zweiten Datenströme C1, C21, C22 binäre Symbole aufweisen.

Des Weiteren können der erste und die zweiten Datenströme C1, C21, C22 in einem ersten Speichermodul SM1 organisiert abgelegt werden. Einzelne codierte Datenpakete D10, ..., D32 des ersten und der jeweiligen zweiten Datenströme C1, C21, C22 repräsentieren dabei bspw. jeweils Daten für ein Videobild oder eine Gruppe von Videobildern. So sind bspw. für ein erstes Videobild im codierten Datenpaket D10 Daten des ersten Datenstroms C1 und im codierten Datenpaket D20 bzw. D30 Daten des zweiten Datenstroms C21 bzw. C22 enthalten. Die Daten eines zweiten Videobildes finden sich in den codierten Datenpaketen D11, D21 und D31. Die Daten eines weiteren Videobildes repräsentieren bspw. die codierten Datenpakete D12, D22 und D32.

In einem nachfolgenden Verarbeitungsschritt werden die ersten und zweiten Datenströme C1, C21, C22 jeweils in einem vordefiniert zugeordneten Übertragungskanal U1, U21, U22 gesendet. Mit Hilfe einer Zuordnungsvorschrift können die codierten Datenpakete des ersten und der zweiten Datenströme C1, C21, C22 jeweils einem Übertragungskanal U1, U21, U22 zugeordnet werden. Eine derartige Zuordnungsvorschrift lautet beispielsweise:

| Datenstrom | Übertragungskanal |
|---|---|
| C1 | U1 |
| C21 | U21 |
| C22 | U22 |

Die Übertragungskanäle U1, U21, U22 sind einem physikalischen Übertragungsmedium derart zugeordnet, dass eine eindeutige Wiedergewinnung der Übertragungskanäle U1, U21, U22 an einer Empfangsvorrichtung EV ermöglicht wird. Dies wird anhand eines zeitschlitzorientierten Übertragungsverfahrens UK näher dargestellt. Dieses Übertragungsverfahren UK definiert einzelne Zeitschlitze ZA, ..., ZD. Die einzelnen Zeitschlitze ZA, ..., ZD können in Rahmen UR organisiert sein, wobei sich die Rahmen UR wiederholen können. In diesem Ausführungsbeispiel wird folgende Zuordnung zwischen Übertragungskanal und Zeitschlitz angenommen:

| Zeitschlitz | Übertragungskanal |
|---|---|
| ZA | U1 |
| ZB | U21 |
| ZC | U22 |

Unter Verwendung eines ersten Zuordnungsmoduls ZM1 werden die codierten Datenpakete D10, ..., D31 des ersten bzw. der zweiten Datenströme C1, C21, C22 mittels der Zuordnung des dazugehörigen Übertragungskanals U1, U21, U22 dem jeweiligen zu dem Übertragungskanal U1, U21, U22 zugeordneten Zeitschlitz ZA, ZB, ZC rahmenweise zugewiesen. Das Ergebnis dieser Zuordnung ist in Figur 1 zu sehen. Im Weiteren werden mit Hilfe des Übertragunsverfahrens UK die codierten Datenpakete D10, ..., D32 von der Sendevorrichtung SV an die Empfangsvorrichtung EV übermittelt. Dies kann bspw. mit Hilfe eines DVB-Netzwerks (DVB - Digitial Video Broadcast) oder eines ISDN-Netzwerks (ISDN - Integrated Services Digital Network) erfolgen. Die Figur 1 zeigt weiterhin am Beispiel des Zeitschlitzes ZD, dass nicht in allen Zeitschlitzen Daten übertragen werden müssen.

Die Empfangsvorrichtung EV empfängt die codierten Datenpakete D10, ..., D32, wobei anhand der oben genannten Zuordnungen die Zuordnung von Zeitschlitzen ZA, ..., ZD zu Übertragungskanälen U1, ..., U21 und von Übertragungskanälen U1, ..., U21 zu Datenströmen C1, ..., C22 ermöglicht wird. Diese Zuordnung wird mit Hilfe eines zweiten Zuordnungsmoduls ZM2 in der Empfangsvorrichtung EV durchgeführt. Hierbei ist jedoch zu beachten, dass in Abhängigkeit der Gerätefunktionalitäten des Endgeräts, in dem sich die Empfangsvorrichtung EV befindet, nicht alle Übertragungskanäle bei der Zuordnung berücksichtigt werden müssen. Bspw. werden lediglich diejenigen Übertragungskanäle ausgelesen, die Daten der zu berücksichtigenden Datenströme enthalten.

Im vorliegenden Ausführungsbeispiel soll für das zweite Endgerät der rekonstruierte Mediadatenstrom R derart generiert werden, dass dieser die Bildwiederholrate von 15fps und die Bildauflösung von CIF unterstützt. Denn das zweite Endgerät umfasst eine Gerätefunktionalität, die diese Bildparameter, d.h. z.B. Bildwiederholrate von 15fps, unterstützt. Eine höhere Bildwiederholrate ist bspw. aus Komplexitätsgründen oder aufgrund eines Ausgabemediums, das maximal 15fps wiedergeben kann, nicht möglich. Der rekonstruierte Mediadatenstrom R kann durch den ersten Datenstrom C1 und den zweiten Datenstrom C21 erstellt werden. Zum Auslesen der diesen Datenströmen C1, C21 zugeordneten Daten, d.h. den codierten Datenpaketen, D10, ..., D22, wählt das zweite Zuordnungsmodul ZM2 lediglich die beiden Übertragungskanäle U1, U21 aus, um die geforderten Daten zu erhalten. Der Übertragungskanal U22 wird hierbei nicht berücksichtigt. Die aus den Übertragungskanälen U1, U21 erhaltenen codierten Datenpakete D10, ..., D22 können in einem zweiten Speichermodul SM2 organisiert gespeichert werden.

Die Daten, d.h. die codierten Datenpakete D10, ..., D22, des ersten und zweiten Datenstroms C1, C21 werden anschließend einem Decodiermodul DM übergeben, das aus diesen Daten einzelne Videobilder erzeugt. Bspw. kann durch Decodierung der codierten Datenpakete D10, D20 ein erstes Videobild rekonstruiert werden. Die rekonstruierten Videobilder ergeben den rekonstruierten Mediadatenstrom R. Dieser rekonstruierte Mediadatenstrom R zeigt möglicherweise eine geringere Bildqualität als der Mediadatenstrom M, da nicht die Daten aller Datenströme C1, C21, C22 bei der Rekonstruktion, d.h. Decodierung, berücksichtigt worden sind. Ferner können aufgrund einer möglicherweise durchgeführten Kompression Codierartefakte auftreten, die eine reduzierte Bildqualität gegenüber dem Mediadatenstrom M begründen.

Der rekonstruierte Mediadatenstrom R kann an einem Ausgabemedium, bspw. einem Bildschirm, ausgegeben und/oder in einem weiteren Speichermodul zur späteren Weiterbehandlung abgelegt werden.

Im Vergleich zur Vorgehensweise zur Rekonstruktion des rekonstruierten Mediadatenstroms R für das zweite Endgerät werden bei Verwendung des ersten Endgeräts lediglich die Daten, d.h. die codierten Datenpakete D10, ..., D12, des ersten Datenstroms C1 verwendet, da die Daten der zweiten Datenströme C21, C22 durch das erste Endgerät nicht verarbeitet werden können. Somit liest das zweite Zuordnungsmodul ZM2 lediglich den Übertragungskanals U1 und decodiert die Daten des ersten Datenstroms C1. Diese Decodierung erzeugt einen rekonstruierten Mediadatenstrom R, der die Bildwiederholrate von 15 fps und eine QCIF Bildauflösung repräsentiert.

Die Steuerung des zweiten Zuordnungsmoduls ZM2 kann mit Hilfe eines Steuersignals SG bewerkstelligt werden, wobei das Steuersignal SG in Abhängigkeit von den im Endgerät verfügbaren Gerätefunktionalitäten derart gebildet wird, dass lediglich diejenigen Übertragungskanäle berücksichtigt werden, die den Gerätefunktionen entsprechen. Ferner kann eine Verringerung der zu berücksichtigenden Übertragungskanäle zusätzlich durch einen Benutzer mit Hilfe einer Benutzersteuerung durchgeführt werden. Zusätzlich oder alternativ kann eine Auswahl der zu berücksichtigenden Übertragungskanäle in Abhängigkeit von Darstellmöglichkeiten eines Bildschirms, einer Kapazität einer Batterie einer Empfangsvorrichtung oder auch in Abhängigkeit einer Auslastung der Empfangsvorrichtung von statten gegen. Die zwei zuletzt erwähnten Abhängigkeiten ermöglichen einen ressourceneffizienten Einsatz des erfindungsgemäßen Verfahrens zum Empfangen, da bei reduzierter Kapazität und/oder Auslastung durch Reduktion der zu lesenden Übertragungskanäle eine Betriebsdauer der Empfangsvorrichtung erhöht werden kann.

Somit ermöglicht das erfindungsgemäße Verfahren zum Senden bzw. das erfindungsgemäße Verfahren zum Empfangen, dass Endgeräte mit unterschiedlichen Gerätefunktionalitäten mediale Inhalte, wie bspw. eine Nachrichtensendung oder ein Musikstück, empfangen und wiedergeben können. Hierbei ist insbesondere vorteilhaft, dass neben der einfachen Handhabung beim Auslesen eines oder mehrerer Übertragungskanäle, eine zum Empfang und Rekonstruktion erforderliche Komplexität in Abhängigkeit der ausgelesenen Übertragungskanäle sinkt bzw. steigt. Je weniger Übertragungskanäle berücksichtigt werden, desto geringer ist die Komplexität. Eine Verringerung der Komplexität kann sich in einer preiswerteren Realisierung, z.B. Hardwarekomponenten, und in einem reduzierten Stromverbrauch widerspiegeln. Da die jeweilige Zuordnung der Datenströme C1, C12, C22 zu den Übertragungskanälen U1, U21, U22 vordefiniert ist, ist ein ständiges "Mithören" aller Übertragungskanäle nicht notwendig. Somit kann der Stromverbrauch zusätzlich dadurch reduziert werden, dass lediglich, während die zu berücksichtigenden Übertragungskanäle U1, U21, U22 aktiv sind, eine Zuordnung der Daten, d.h. codierte Datenpakete, erfolgen muss. Ansonsten kann z.B. ein Empfangsmodul (nicht gezeichnet) der Empfangsvorrichtung, das einen physikalischen Empfang der Übertragungskanäle steuert, von der Energieversorgung getrennt werden.

Im Folgenden werden Varianten und Erweiterungen des erfindungsgemäßen Verfahren zum Senden bzw. des erfindungsgemäßen Verfahrens zum Empfangen näher erläutert.

Die Zeitschlitze ZA, .., ZD können eine feste Zeitdauer oder unterschiedliche Zeitdauern aufweisen. In Abhängigkeit von einer Datenrate des zeitschlitzorientierten Übertragungsverfahrens UK können diese Zeitschlitze ZA, ..., ZD eine feste oder unterschiedliche Anzahl an Dateneinheiten, z.B. gemessen in Bytes, beinhalten. So umfasst bspw. der Zeitschlitz ZA eine Anzahl von 100 Bytes und der Zeitschlitz ZB eine Anzahl von 50 Bytes. Die Zeitschlitze ZA, ..., ZD können von Rahmen UR zu Rahmen UR eine gleiche maximale Anzahl von Dateneinheiten aufnehmen, wohingegen die Daten der Datenströme C1, C21, C21 von Rahmen UR zu Rahmen UR eine feste oder eine variierende Anzahl an Dateneinheiten in den Zeitschlitzen ZA, ..., ZD umfassen können.

In einer Erweiterung können die Daten eines Datenstroms, z.B. des ersten Datenstrom C1, auf zumindest zwei Übertragungskanäle aufgeteilt gesendet und empfangen werden.

In einer alternativen Erweiterung des erfindungsgemäßen Verfahrens zum Senden kann bei der Codierung bzw. Generierung des ersten und/oder zweiten Datenströme C1, C21, C22 eine jeweilige zum ersten und/oder der zweiten Datenstrom C1, C21, C22 gehörende Datenrate in Abhängigkeit einer Bandbreite B1, B21, B22 des jeweiligen Übertragungskanals U1, U21, U22 bestimmt werden. Ist bspw. eine Gesamtübertragungsdatenrate des zeitschlitzorientierten Übertragungsverfahrens UK bekannt, so kann jedem Zeitschlitz ZA, ..., ZD eine Bandbreite zugeordnet werden. Beträgt die Gesamtübertragungsdatenrate des zeitschlitzorientierten Übertragungsverfahrens UK z.B. 100 kbyte/s, so errechnet sich die Bandbreite des Zeitschlitzes ZA bzw. des Übertragungskanals U1 aus einer Anzahl an Dateneinheiten pro Zeitschlitz, z.B. 100 Bytes, zu einer Anzahl an Dateneinheiten pro Rahmen UR, z.B. 500 Bytes, und somit zu

$$B1 = 100 \text{ kbyte/s} * 100 \text{ Byte} / 500 \text{ Byte} = 20 \text{ kbyte/s}.$$

Somit kann die Codierung der Datenströme C1, C21, C22 in Abhängigkeit von der jeweils pro Übertragungskanal U1, U21, U22 zur Verfügung stehenden Bandbreite B1, B21, B22 gesteuert werden. So wird gemäß dem obigen Beispiel eine Ratenkontrolle des Codiermoduls CM eine maximale Datenrate für den ersten Datenstrom C1 zu B1 = 20 kbyte/s erzeugen.

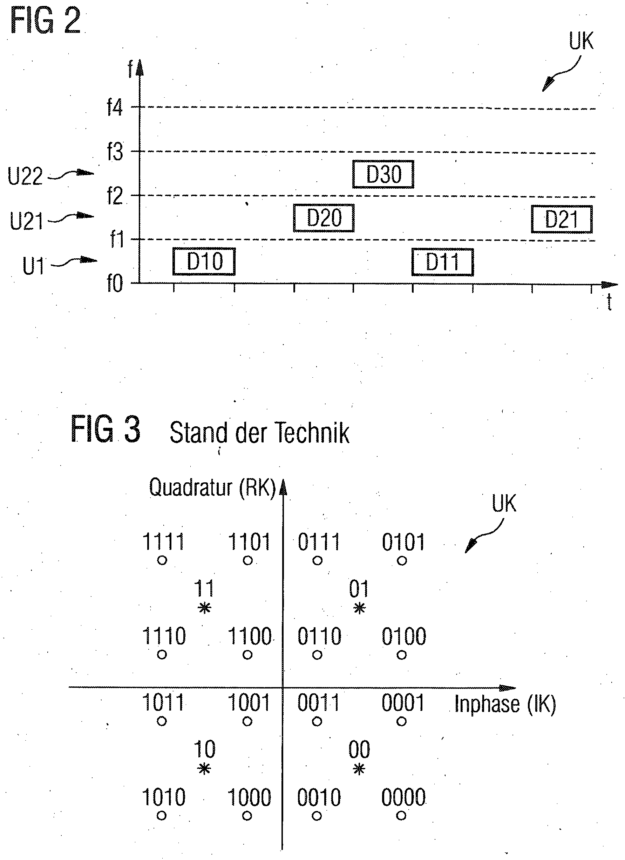

In einer Alternative oder in Ergänzung zur Verwendung des zeitschlitzorientierten Übertragungsverfahrens UK zur Übertragung der Übertragungskanäle kann auch ein frequenzbasiertes Übertragungsverfahren UK eingesetzt werden. In Figur 2 ist dies näher dargestellt. Dabei werden die jeweiligen Übertragungskanäle U1, U21, U22 innerhalb eines jeweiligen Frequenzbandes FA, ..., FC übertragen. So wird bspw. der Übertragungskanal U21 in dem Frequenzband FA, das zwischen den Frequenzen f1 und f2 liegt übermittelt. Dabei können die Frequenzbänder FA, ..., FC z.B. 10 kHz Bandbreite aufweisen. Ferner ist der Figur 2 zu entnehmen, dass die codierten Datenpakete D10, D20, D30 sowohl in unterschiedlichen Frequenzbändern als auch in unterschiedlichen Zeitschlitzen übertragen werden. Figur 2 stellt somit ein kombiniertes frequenz- und zeitschlitzorientiertes Übertragungsverfahren UK dar. Zusätzlich kann bei diesem Übertragungsverfahren eine Modulation auf eine Trägerfrequenz erfolgen. Das Bezugszeichen UK soll im Rahmen dieser Erfindung jedes Übertragungsverfahren bezeichnen, das eine eindeutige Wiedergewinnung der Übertragungskanäle U1, U21, U22 an einer Empfangsvorrichtung EV ermöglicht.

Anstelle der Verwendung eines kombinierten frequenz- und zeitschlitzorientierten Übertragungsverfahrens UK kann auch nur ein frequenzorientiertes Übertragungsverfahren UK eingesetzt werden. Dabei wird den Übertragungskanälen U1, U21, U22 jeweils ein Frequenzband FA, ..., FC zugeordnet. Die Daten der jeweiligen Datenströme C1, C21, C22 werden innerhalb der jeweils zugehörigen Übertragungskanäle U1, U21, U22 bzw. den hierzu zugeordneten Frequenzbändern übertragen.

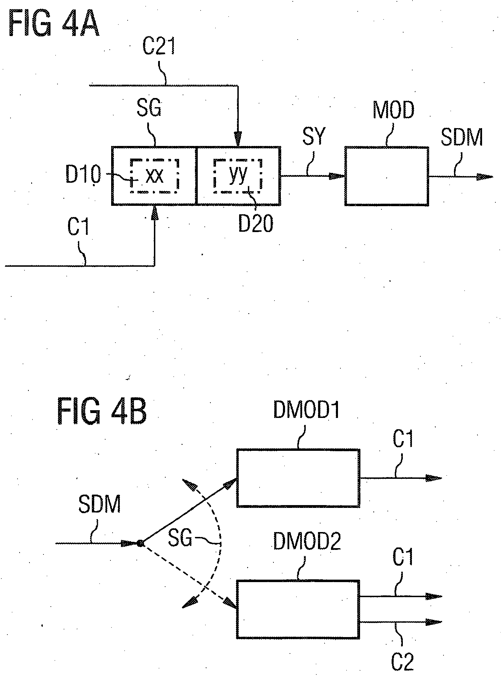

In einer Erweiterung des erfindungsgemäßen Verfahrens kann ein modulationsorientiertes Übertragungsverfahren UK benutzt werden. Dies wird anhand der Figuren 3, 4A und 4B näher dargestellt. Umfassen bspw. das codierte Datenpaket D10 des ersten Übertragungskanals U1 die zwei Symbole XX und das codierte Datenpaket D20 des zweiten Übertragungskanals U21 die Symbole YY so kann durch Aneinanderreihen dieser Symbole XX bzw. YY durch einen Symbolgenerator SG ein kombiniertes Symbol SY = YYXX generiert werden, siehe Figur 4A. Mit Hilfe einer nachfolgenden Modulation durch ein Modulationsmodul MOD entsteht das modulierte Signal SDM. Werden binäre Symbole, d.h. 0 bzw. 1, für die Symbole X bzw. Y verwendet, so sind bei einer 16-QAM Modulation (QAM - Quadrature Amplitude Modulation) die modulierten Signale in Form von Kreisen "o" im IK-RK Diagramm (IK = Inphase Komponente; RK = Quadratur Komponente) gemäß Figur 3 zu finden. Dies ist aus dem Stand der Technik bekannt. Innerhalb des modulierten Signals SDM repräsentieren die Daten bzw. Datenpakete des ersten Datenstroms einen ersten Unterträger und die Daten bzw. Datenpakete des zweiten Datenstroms einen zweiten Unterträger. Die Unterträger bauen vorzugsweise hierarchisch aufeinander auf, wie in Figur 3 dargestellt.

In diesem Beispiel wird als Modulationsverfahren bzw. Demodulationsverfahren das 16-QAM Verfahren eingesetzt. Im Rahmen dieser Erfindung kann jedes Verfahren benutzt werden, das eine Trennung eines Unterträgers eines Modulationsverfahrens im Rahmen des dazugehörigen Demodulationsverfahrens ermöglicht, wobei jeder Unterträger jeweils einen der Übertragungskanäle darstellt.

In einer alternativen Erweiterung des erfindungsgemäßen Verfahrens werden zumindest zwei Datenströme, umfassend den ersten und mindestens einen zweiten Datenstrom oder mindestens zwei zweite Datenströme, einem einzigen Übertragungskanal zugeordnet.

Zur Rekonstruktion des rekonstruierten Mediadatenstroms R kann in der Empfangsvorrichtung EV ein Aufbau gemäß Figur 4B benutzt werden. Hierbei werden die modulierten Signale SDM empfangen und mittels eines Auswahlschalters, der durch das Steuersignal SG gesteuert wird, entweder an ein erstes Demodulationsrriodul DMOD1 oder an ein zweites Demodulationsmodul DMOD2 übergeben. Das erste Demodulationsmodul DMOD1 liefert lediglich Daten des Übertragungskanals U1, d.h. codierte Daten D10, ..., D12 des ersten Datenstroms C1. Diese sind in Figur 3 mit einem Symbol "*" gekennzeichnet. Sollen dagegen die Daten der Übertragungskanäle U1 und U21, d.h. die codierten Daten D10, ..., D12 des ersten Datenstroms C1 und die codierten Daten D20, ..., D22 des zweiten Datenstroms C21, ausgegeben werden, so werden die modulierten Signale SDM an das zweite Demodulationsmodul DMOD2 übergeben. Diese Variante für das Modulationsverfahren UK hat bspw. den Vorteil, dass auch bei sich verschlechternden Übertragungsqualitäten ein Empfang, z.B. der Nachrichtensendung, dadurch ermöglicht wird, dass nur der erste Unterträger bzw. Übertragungskanal U1 bei der Rekonstruktion berücksichtigt wird, da dieser Übertragungskanal U1 wegen des modulationsorientierten Übertragungsverfahren UK eine geringere Störanfälligkeit aufweist als der zweite Unterträger bzw. der Übertragungskanal U21. Somit kann das Steuersignal SG auch in Abhängigkeit einer Übertragungsqualität Q ausgelöst bzw. geformt werden. Dabei wird bspw. der zweite Datenstrom C21 an das zweite Zuordnungsmodul ZM2 übergeben, welche anhand einer Paketfehlerrate der codierten Datenpakete D20, ..., D22 das Steuersignal SG neu erstellt. Sind bspw. mehr als 30% der codierten Datenpakete D20, ..., D22 fehlerhaft, so wird das Steuersignal SG derart verändert, dass lediglich die codierten Datenpakete D10, ..., D12 des ersten Datenstroms C1 für die Rekonstruktion des rekonstruierten Mediadatenstrom R berücksichtigt wird. Diese Vorgehensweise kann eine Erhöhung der Bildqualität des rekonstruierten Mediadatenstroms R erzielen, da eine Berücksichtigung des fehlerhaften zweiten Datenstroms bei der Rekonstruktion zu störenden Bildartefakten führen kann.

Die erfindungsgemäße Sendevorrichtung SV kann in einem Streaming-Server und/oder Broadcasting-Server untergebracht sein. Der Steaming-Server arbeitet dabei bspw. nach dem 3GPP-PSS Standard (3GPP - 3rd Generation Partnership Project; PSS - Packet-based Streaming Service) und der Broadcasting-Sever nach dem 3GPP-MBMS (MBMS - Multimedia Broadcast/Multicast Service) oder dem DCB-H Standard (DVB-H - Digital Video Broadcast - Handheld). Die Server können in einem UMTS-, GSM- und/oder IP-basierten Netzwerk integriert sein (UMTS - Universal Mobile Telecommunications System; GSM - Global System for Mobile Communications; IP - Internet Protocol).

Die erfindungsgemäße Empfangsvorrichtung EV kann in einem tragbaren Gerät, insbesondere einem Mobiltelefon oder einem PDA (PDA - Personal Digital Assistant), und/oder einem stationären Gerät, insbesondere einem Rechner oder einem Festnetztelefon, integriert sein.

Die Sendevorrichtung SV bzw. die Empfangsvorrichtung EV werden beispielsweise mit Hardwarekomponenten, oder einem Rechner, der derart ausgestaltet ist, dass das Verfahren zum Senden bzw. das Verfahren zum Empfangen und Erstellen in Software, ermöglicht wird, oder aus einer Kombination aus Hardware und Software realisiert.

## Patentansprüche

1.   Verfahren zum Senden eines Mediadatenstroms (M) bei dem

   a) durch eine Codierung des Mediadatenstroms (M) ein erster Datenstrom (C1) und zumindest ein zweiter Datenstrom (C21, C22) derart generiert wird, dass der erste Datenstrom (C1) den Mediadatenstroms (M) in einer Basisqualität und ein oder mehrere zweite Datenströme (C21, C22) zusammen mit dem ersten Datenstrom (C1) den Mediadatenstrom (M) in einer gegenüber der Basisqualität verbesserten Qualität repräsentieren,

   **dadurch gekennzeichnet, dass**

   b) Daten des ersten und der zweiten Datenströme (C1, C21, C22) jeweils in einem vordefiniert zugeordneten Übertragungskanal (U1, U21, U22) gesendet werden.

2.   Verfahren nach dem vorhergehenden Anspruch,
   **dadurch gekennzeichnet, dass**
   die Daten des ersten und/oder der zweiten Datenströme (C1, C21, C22) unter Verwendung eines Kompressionsverfahrens erzeugt werden, wobei durch das Kompressionsverfahren insbesondere digitale Daten generiert werden.

3.   Verfahren nach einem der vorhergehenden Ansprüche,
   **dadurch gekennzeichnet, dass**
   der erste und die zweiten Datenströme (C1, C21, C22) derart generiert werden, dass sie eine jeweilige Datenrate in Abhängigkeit einer Bandbreite (B1, B21, B22) des jeweiligen Übertragungskanals (U1, U21, U22) aufweisen.

4.   Verfahren zum Empfangen und Erstellen eines rekonstruierten Mediadatenstroms (R),
   bei dem

   a) Daten von einem ersten und zumindest einem zweiten Datenstrom (C1, C21, C22) empfangen werden, wobei der erste Datenstrom (C1) einen Mediadatenstrom (M) in einer Basisqualität und ein oder mehrere zweite Datenströme (C21, C22) zusammen mit dem ersten Datenstrom (C1) den Mediadatenstrom (M) in einer gegenüber der Basisqualität verbesserten Qualität repräsentieren,
   b) der rekonstruierte Mediadatenstrom (R) durch Decodierung der Daten des ersten und zumindest eines zweiten Datenstroms (C1, C21, C22) generiert wird

   **dadurch gekennzeichnet, dass**
   die Daten des ersten Datenstroms (C1) und des oder der zweiten Datenströme (C21, C22) in jeweils einem vordefiniert zugeordnetem Übertragungskanal (U1, U21, U22) empfangen werden.

5.   Verfahren nach dem vorhergehenden Anspruch,

**dadurch gekennzeichnet, dass**
eine Anzahl von zusätzlich zum Übertragungskanal (U1) des ersten Datenstroms (C1) zu empfangende Übertragungskanäle (U21, U22) der zweiten Datenströme (C21, C22) in Abhängigkeit von einem Steuersignal (SG) bestimmt wird.

6. Verfahren nach dem vorhergehenden Anspruch,
**dadurch gekennzeichnet, dass**
das Steuersignal (SG) in Abhängigkeit einer Kapazität einer Batterie einer das Verfahren zum Empfang ausführenden Empfangsvorrichtung (EV), eines unterstützten Gerätefunktionsumfangs der Empfangsvorrichtung (EV), einer Auslastung der Empfangsvorrichtung (EV) und/oder auf Grundlage einer Veränderung einer Übertragungsqualität (Q) generiert wird.

7. Verfahren nach einem der vorhergehenden Ansprüche,
**dadurch gekennzeichnet, dass**
den Übertragungskanälen (U1, U21, U22) jeweils Zeitschlitze (ZA, ZB, ZC) eines Übertragungsverfahrens zugewiesen werden.

8. Verfahren nach einem der vorhergehenden Ansprüche,
**dadurch gekennzeichnet, dass**
den Übertragungskanälen (U1, U21) Unterträger eines Modulationsverfahren derart zugeordnet werden, dass die einzelnen Übertragungskanäle (U1, U21) als Teil eines zum Modulationsverfahren dazugehörigen Demodulationsverfahrens trennbar sind.

9. Verfahren nach einem der vorhergehenden Ansprüche,
**dadurch gekennzeichnet, dass**
den Übertragungskanälen (U1, U21, U22) jeweils ein spezifisches Frequenzband (FA, FB, FC) eines Übertragungsverfahrens zugewiesen wird.

10. Verfahren nach einem der vorhergehenden Ansprüche,
**dadurch gekennzeichnet, dass**
zumindest zwei Datenströme (C1, C21, C22), umfassend den ersten und mindestens einen zweiten Datenstrom (C1, C21) oder mindestens zwei zweite Datenströme (C21, C22), einem einzigen Übertragungskanal (U1) zugeordnet werden.

11. Sendevorrichtung (SV) zum Senden eines Mediadatenstroms (M), das zur Durchführung eines Verfahrens zum Senden, insbesondere nach einem der Ansprüche 1 bis 3 oder 7 bis 10, ausgestaltet ist,
bei dem

a) ein Codiermodul (CM) derart ausgestaltet ist, dass durch eine Codierung des Mediadatenstroms (M) ein erster Datenstrom (C1) und zumindest ein zweiter Datenstrom (C21, C22) derart generiert wird, dass der erste Datenstrom (C1) den Mediadatenstrom (M) in einer Basisqualität und ein oder mehrere zweite Datenströme (C21, C22) zusammen mit dem ersten Datenstrom (C1) den Mediadatenstrom (M) in einer gegenüber der Basisqualität verbesserten Qualität repräsentieren,

**dadurch gekennzeichnet, dass**

b) ein erstes Zuordnungsmodul (ZM1) derart ausgestaltet ist, dass Daten des ersten und der zweiten Datenströme (C1, C21, C22) jeweils in einem vordefiniert zugeordneten Übertragungskanal (U1, U21, U22) gesendet werden.

12. Empfangsvorrichtung (EV) zum Empfangen eines rekonstruierten Mediadatenstroms (R), das zur Durchführung eines Verfahrens zum Empfangen und Erstellen eines rekonstruierten Datenstroms (R), insbesondere nach einem der Ansprüche 4 bis 10, ausgestaltet ist,
bei dem

a) ein zweites Zuordnungsmodul (ZM2) derart ausgestaltet ist, dass Daten von einem ersten und zumindest einem zweiten Datenstrom (C1, C21, C22) empfangen werden, wobei der erste Datenstrom (C1) einen Mediadatenstrom (M) in einer Basisqualität und ein oder mehrere zweite Datenströme (C21, C22) zusammen mit dem ersten Datenstrom (C1) den Mediadatenstrom (M) in einer gegenüber der Basisqualität verbesserten Qualität repräsentieren,

b) ein Decodiermodul (DM) derart ausgestaltet ist, dass der rekonstruierte Mediadatenstrom (R) durch Decodierung der Daten des ersten und zumindest eines zweiten Datenstroms (C1, C21, C22) generiert wird,

**dadurch gekennzeichnet, dass**

das zweite Zuordnungsmodul (ZM2) derart ausgestaltet ist, dass die Daten des ersten Datenstroms (C1) und des oder der zweiten Datenströme (C21, C22) in jeweils einem vordefiniert zugeordneten Übertragungskanal (U1, U21, U22) empfangen werden.

**Claims**

1. Method for sending a media data stream (M) in which

   a) by encoding the media data stream (M) a first data stream (C1) and at least one second data stream (C21, C22) is generated such that the first data stream (C1) represents the media data stream (M) in a basic quality and one or more second data streams (C21, C22) together with the first data stream (C1) represent the media data stream (M) in an improved quality compared to the basic quality, **characterised in that**
   b) data of the first and the second data streams (C1, C21, C22) is sent in a predefined assigned transmission channel (U1, U21, U22) respectively.

2. Method according to the previous claim,
   **characterised in that**
   the data of the first and/or the second data streams (C1, C21, C22) is created using a compression method, wherein especially digital data is generated by the compression method.

3. Method according to one of the previous claims,
   **characterised in that**
   the first and the second data streams (C1, C21, C22) are generated such that they exhibit the respective data rate as a function of a bandwidth (B1, B21, B22) of the respective transmission channel (U1, U21, U22).

4. Method for receiving and creating a reconstructed media data stream (R), in which

   a) data of one first and at least one second data stream (C1, C21, C22) is received, wherein the first data stream (C1) represents a media data stream (M) in a basic quality and one or more second data streams (C21, C22) together with the first data stream (C1) represent the media data stream (M) in an improved quality compared to the basic quality,
   b) the reconstructed media data stream (R) is generated by decoding of the data of the first and at least one second data stream (C1, C21, C22)

   **characterised in that**
   the data of the first data stream (C1) and of the second data stream(s) (C21, C22) are received in a predefined assigned transmission channel (U1, U21, U22) respectively.

5. Method according to the previous claim,
   **characterised in that**
   a number of transmission channels (U21, U22) of the second data streams (C21, C22) to be received in addition to the transmission channel (U1) of the first data stream (C1) are determined as a function of a control signal (SG).

6. Method according to the previous claim,
   **characterised in that**
   the control signal (SG) is generated as a function of a capacity of a battery of a reception apparatus (EV) executing the method for receiving, a function of a supported range of device functions of the reception apparatus (EV), a function of the loading of the reception apparatus (EV) and/or on the basis of a change in a transmission quality (Q).

**7.** Method according to one of the previous claims,
**characterised in that**
the transmission channels (U1, U21, U22) are each assigned to time slots (ZA, ZB, ZC) of a transmission method.

**8.** Method according to one of the previous claims,
**characterised in that**
the transmission channels (U1, U21) are assigned to subcarriers of a modulation method such that the individual transmission channels (U1, U21) are separable as part of a demodulation method associated with the modulation method.

**9.** Method according to one of the previous claims,
**characterised in that**
the transmission channels (U1, U21, U22) are each allocated a specific frequency band (FA, FB, FC) of a transmission method.

**10.** Method according to one of the previous claims,
**characterised in that**
at least two data streams (C1, C21, C22), comprising the first and at least one second data stream (C1, C21) or at least two second data streams (C21, C22), are assigned to an individual transmission channel (U1).

**11.** Transmission apparatus (SV) for sending a media data stream (M), which is embodied for carrying out a method for transmission, especially according to one of claims 1 to 3 or 7 to 10,
in which

a) an encoding module (CM) is embodied such that, by an encoding of the media data stream (M) a first data stream (C1) and at least one second data stream (C21, C22) are generated such that the first data stream (C1) represents the media data stream (M) in a basic quality and one or more second data streams (C21, C22) together with the first data stream (C1) represent the media data stream (M) in an improved quality compared to the basic quality, **characterised in that**
b) a first assignment module (ZM1) is embodied such that data of the first and the second data streams (C1, C21, C22) is transmitted in a predefined assigned transmission channel (U1, U21, U22) respectively.

**12.** Reception apparatus (EV) for receiving a reconstructed media data stream (R), which is embodied for carrying out a method for receiving and creating a reconstructed data stream (R), especially according to one of claims 4 to 10,
in which

a) a second assignment module (ZM2) is embodied such that data of a first and at least one second data stream (C1, C21, C22) is received, wherein the first data stream (C1) represents a media data stream (M) in a basic quality and one or more second data streams (C21, C22) together with the first data stream (C1) represent the media data stream (M) in an improved quality compared to the basic quality,
b) a decoder module (DM) is embodied such that the reconstructed media data stream (R) is generated by decoding the data of the first and at least one second data stream (C1, C21, C22)

**characterised in that**
the second assignment module (ZM2) is embodied such that the data of the first data stream (C1) and of the second data stream(s) (C21, C22) are received in a predefined assigned transmission channel (U1, U21, U22) respectively.

**Revendications**

**1.** Procédé pour émettre un flux de données multimédia (M), dans lequel

a) par un codage du flux de données multimédia (M), un premier flux de données (C1) et au moins un deuxième flux de données (C21, C22) sont générés de telle manière que le premier flux de données (C1) représente le flux de données multimédia (M) dans une qualité de base et un ou plusieurs deuxièmes flux de données (C21, C22), en association avec le premier flux de données (C1), représentent le flux de données multimédia (M) dans une qualité améliorée par rapport à la qualité de base,

**caractérisé en ce que**

b) des données du premier et des deuxièmes flux de données (C1, C21, C22) sont respectivement émises dans un canal de transmission (U1, U21, U22) affecté d'une manière prédéfinie.

2. Procédé selon la revendication précédente,
**caractérisé en ce que**
les données du premier et/ou des deuxièmes flux de données (C1, C21, C22) sont générées par le moyen d'un procédé de compression,
ledit procédé de compression générant notamment des données numériques.

3. Procédé selon l'une des revendications précédentes, **caractérisé en ce que**
le premier et les deuxièmes flux de données (C1, C21, C22) sont générés de telle manière qu'ils présentent un débit de données respectif en fonction d'une bande passante (B1, B21, B22) du canal de transmission (U1, U21, U22) respectif.

4. Procédé pour recevoir et générer un flux de données multimédia reconstruit (R),
dans lequel

a) des données d'un premier et au moins d'un deuxième flux de données (C1, C21, C22) sont reçues, le premier flux de données (C1) représentant le flux de données multimédia (M) dans une qualité de base et un ou plusieurs deuxièmes flux de données (C21, C22), en association avec le premier flux de données (C1), représentant le flux de données multimédia (M) dans une qualité améliorée par rapport à la qualité de base,
b) le flux de données multimédia reconstruit (R) est généré par décodage des données du premier et au moins d'un deuxième flux de données (C1, C21, C22),

**caractérisé en ce que**
les données du premier flux de données (C1) et du ou des deuxièmes flux de données (C21, C22) sont respectivement reçues dans un canal de transmission (U1, U21, U22) affecté d'une manière prédéfinie.

5. Procédé selon la revendication précédente,
**caractérisé en ce que**
un nombre de canaux de transmission (U21, U22) des deuxièmes flux de données (C21, C22) à recevoir en plus du canal de transmission (U1) du premier flux de données (C1) est déterminé en fonction d'un signal de commande (SG).

6. Procédé selon la revendication précédente,
**caractérisé en ce que**
le signal de commande (SG) est généré en fonction d'une capacité d'une batterie d'un dispositif de réception (EV) mettant en oeuvre le procédé de réception, de fonctionnalités d'appareil supportées du dispositif de réception (EV), d'une utilisation du dispositif de réception (EV) et/ou sur la base d'une modification d'une qualité de transmission (Q).

7. Procédé selon l'une des revendications précédentes,
**caractérisé en ce que**
les canaux de transmission (U1, U21, U22) se voient respectivement affecter des créneaux temporels (ZA, ZB, ZC) d'un procédé de transmission.

8. Procédé selon l'une des revendications précédentes,
**caractérisé en ce que**
les canaux de transmission (U1, U21) se voient affecter des sous-porteuses d'un procédé de modulation de telle manière que les différents canaux de transmission (U1, U21) sont séparables en tant que partie d'un procédé de démodulation faisant partie du procédé de modulation.

9. Procédé selon l'une des revendications précédentes,
**caractérisé en ce que**
les canaux de transmission (U1, U21, U22) se voient chacun affecter une bande de fréquences (FA, FB, FC) spécifique d'un procédé de transmission.

**10.** Procédé selon l'une des revendications précédentes, **caractérisé en ce que**
au moins deux flux de données (C1, C21, C22), comprenant le premier et au moins un deuxième flux de données (C1, C21) ou au moins deux deuxièmes flux de données (C21, C22), sont affectés à un seul canal de transmission (U1).

**11.** Dispositif d'émission (SV) pour émettre un flux de données multimédia (M), configuré pour la mise en oeuvre d'un procédé d'émission, en particulier selon l'une des revendications 1 à 3 ou 7 à 10,
dans lequel

a) un module de codage (CM) est configuré de telle manière que par un codage du flux de données multimédia (M), un premier flux de données (C1) et au moins un deuxième flux de données (C21, C22) sont générés de telle manière que le premier flux de données (C1) représente le flux de données multimédia (M) dans une qualité de base et un ou plusieurs deuxièmes flux de données (C21, C22), en association avec le premier flux de données (C1), représentent le flux de données multimédia (M) dans une qualité améliorée par rapport à la qualité de base, **caractérisé en ce que**
b) un premier module d'affectation (ZM1) est configuré de telle manière que des données du premier et des deuxièmes flux de données (C1, C21, C22) sont respectivement émises dans un canal de transmission (U1, U21, U22) affecté d'une manière prédéfinie.

**12.** Dispositif de réception (EV) pour recevoir un flux de données multimédia reconstruit (R), configuré pour la mise en oeuvre d'un procédé d'émission et de génération d'un flux de données reconstruit (R), en particulier selon l'une des revendications 4 à 10,
dans lequel

a) un deuxième module d'affectation (ZM2) est configuré de telle manière que des données d'un premier et au moins d'un deuxième flux de données (C1, C21, C22) sont reçues, le premier flux de données (C1) représentant le flux de données multimédia (M) dans une qualité de base et un ou plusieurs deuxièmes flux de données (C21, C22), en association avec le premier flux de données (C1), représentant le flux de données multimédia (M) dans une qualité améliorée par rapport à la qualité de base,
b) un module de décodage (DM) est configuré de telle manière que le flux de données multimédia reconstruit (R) est généré par décodage des données du premier et au moins d'un deuxième flux de données (C1, C21, C22),

**caractérisé en ce que**
le deuxième module d'affectation (ZM2) est configuré de telle manière que les données du premier flux de données (C1) et du ou des deuxièmes flux de données (C21, C22) sont respectivement reçues dans un canal de transmission (U1, U21, U22) affecté d'une manière prédéfinie.

# FIG 1

# FIG 2

# FIG 3   Stand der Technik

FIG 4A

FIG 4B

**IN DER BESCHREIBUNG AUFGEFÜHRTE DOKUMENTE**

**In der Beschreibung aufgeführte Patentdokumente**

- US 20040198371 A1
- US 5515377 A